# EUROPÄISCHE PATENTSCHRIFT

(11) **EP 0 902 604 B1**
(45) Veröffentlichungstag und Bekanntmachung des Hinweises auf die Patenterteilung: **18.12.2002**
(21) Anmeldenummer: 98116647.3
(22) Anmeldetag: 03.09.1998
(51) Int. Cl.: H05B 37/02, H05B 39/04, H05B 41/36, H05B 41/40, H05B 41/392, G08B 13/19

(54) **Leuchte**
Lighting system
Système d'éclairage

(30) Priorität: 05.09.1997 DE 19738978
(43) Veröffentlichungstag der Anmeldung: 17.03.1999
(73) Patentinhaber: Zumtobel Staff GmbH, 6851 Dornbirn (AT)
(72) Erfinder: Werner, Walter, Dr., 6850 Dornbirn (DE); Ehnes, Burkhart, 78050 VS-Villingen (DE)
(74) Vertreter: Schmidt-Evers, Jürgen, Dipl.-Ing.

(56) Entgegenhaltungen:
- EP-A- 0 410 484
- EP-A- 0 608 552
- US-A- 4 701 669

## Beschreibung

Die vorliegende Erfindung betrifft eine Leuchte nach dem Oberbegriff des Anspruches 1. Insbesondere betrifft die vorliegende Erfindung eine derartige Leuchte, die als Stehleuchte ausgebildet ist.

Eine gattungsgemäße Leuchte ist bereits aus der AT-PS 376 781 bekannt. Die darin beschriebene Leuchte entspricht einer Arbeitsplatzleuchte, die einem bestimmten Arbeitsplatz zugeordnet ist. Die Leuchte besitzt einen Lichtsensor, der die Helligkeit des von der Leuchte angestrahlten Arbeitsplatzes erfaßt. Hierzu ist der Lichtsensor auf den entsprechenden Arbeitsplatz gerichtet und die Leuchte wir automatisch derart gedimmt, daß der Arbeitsplatz stets gleichmäßig hell beleuchtet wird. Der Lichtsensor umfaßt ein lichtempfindliches Element, z.B. einen Photowiderstand, der in einem geschwärzten, rohrartigen Gehäuse eingesetzt ist. Zur optischen Begrenzung des von dem Lichtsensor überwachten Bereichs kann beispielsweise eine optische Linse vor dem lichtempfindlichen Element angeordnet sein. Der Lichtsensor ist über Anschlußdrähte mit einem Regelgerät gekoppelt, welches in Abhängigkeit von der über den Lichtsensor erfaßten Leuchtdichte am überwachten Arbeitsplatz die Lampe der Leuchte ein- oder ausschaltet oder deren Helligkeit entsprechend dimmt, d.h. die Helligkeitsabgabe regelt.

Bei dieser Arbeitsplatzleuchte tritt jedoch das Problem auf, daß die Dimmung der Arbeitsplatzleuchte abhängig von der Helligkeit an der Arbeitsfläche des bestrahlten Arbeitsplatzes erfolgt, so daß der von dem Lichtsensor erfaßte Helligkeitswert an dem Arbeitsplatz abhängig von der Helligkeit der Arbeitsfläche selbst beeinflußt und verfälscht werden kann. Wird beispielsweise ein weißer Plan auf einem schwarzen Schreibtisch ausgebreitet, erfaßt der Lichtsensor verglichen mit dem Fall, daß kein weißer Plan auf dem Schreibtisch ausgebreitet ist, einen deutlich höheren Helligkeitswert an der Arbeitsfläche des Schreibtisches. Demzufolge würde der Lichtsensor ein stärkeres Dimmen, d.h. Verdunkeln, der Arbeitsplatzleuchte verursachen, obwohl sich tatsächlich in den beiden zuvor genannten Fällen die Umgebungshelligkeit nicht unterscheidet.

In der EP-B1-0 410 484 wird eine Beleuchtungsanlage vorgeschlagen, die das zuvor genannte Problem vermeidet. Bei dieser Beleuchtungsanlage werden Außenlichtsensoren verwendet, die in einem Raum derart angeordnet sind, daß sie durch Fenster hindurch das einfallende Außenlicht erfassen. Auf diese Weise kann das Summenlicht in einem Raum an das sich mit der Tageszeit ändernde Außenlicht angepaßt werden, indem die Lichtstärke

Eine weitere Beleuchtungsanlage ist aus der US 4,701,669 bekannt. Hier sind zwei Sensoren vorgesehen, von denen der erste die an dem zu beleuchtenden Arbeitsplatz vorliegende Helligkeit und der zweite die von einer Lichtquelle abgegebene Helligkeit erfaßt. Durch eine geeignete Kombination der beiden Sensor-Werte soll sichergestellt werden, daß die an dem Arbeitsplatz vorliegende Helligkeit unverändert auf einem vorgegebenen Wert bleibt. Auch hier wird jedoch die von dem ersten Sensor erfaßte Helligkeit durch die Beschaffenheit des Arbeitsplatzes beeinflußt.

Der vorliegenden Erfindung liegt daher die Aufgabe zugrunde, eine automatisch geregelte, d.h. automatisch gedimmte, Leuchte der eingangs beschriebenen Art derart auszugestalten, daß sich Veränderungen des von der Leuchte beleuchteten (Arbeits-) Platzes nicht störend auf das Regel- bzw. Dimmverhalten der Leuchte auswirken. Ebenso sollen Veränderungen in der Kunstlichtbeleuchtung das Regel- bzw. Dimmverhalten nicht beeinflussen.

Insbesondere soll die Leuchte als Stehleuchte ausgestaltbar sein.

Die oben genannte Aufgabe wird gemäß der vorliegenden Erfindung durch eine Leuchte mit Merkmalen des Anspruches 1 gelöst. Die Unteransprüche beschreiben vorteilhafte Ausgestaltungen der vorliegenden Erfindung.

Gemäß der vorliegenden Erfindung werden mehrere Lichtaufnahmeelemente oder Lichtsensoren zur Erfassung des Umgebungslichts der Leuchte verwendet, wobei die Lichtaufnahmeelemente gleichmäßig in Umfangsrichtung der Leuchte angeordnet sind. Durch die gleichmäßige Verteilung der Lichtaufnahmeelemente über den Umfang der Leuchte ist gewährleistet, daß stets mindestens ein Lichtaufnahmeelement optimal zu einem Fenster hin ausgerichtet ist und auf diese Weise das einfallende Außenlicht bestmöglich erfassen kann. Um zu gewährleisten, daß bei der Steuerung der Leuchte lediglich das einfallende Außenlicht berücksichtigt wird, Veränderungen des von der Leuchte beleuchteten (Arbeits-) Platzes oder in der Kunstlichtbeleuchtung allerdings keinen Einfluß haben, sind die Lichtaufnahmeelemente jeweils derart ausgestaltet, daß sie vorwiegend horizontal einfallendes Umgebungslicht erfassen.

Vorzugsweise können die Lichtaufnahmeelemente Einfallswinkelbegrenzungsmittel aufweisen, die dafür sorgen, daß lediglich in einem Bereich von ± 5° zur horizontalen Ebene einfallendes Licht von den Lichtaufnahmeelementen erfaßt wird. Diese Einfallswinkelbegrenzungsmittel können durch ein optisches, lichtundurchlässiges Abschirmelement oder eine optische Linsenanordnung gebildet werden. des (künstlichen) Innenlichtes des Raumes nach einer vorgegebenen Dimmfunktion in Abhängigkeit von bestimmten Führungsgrößen eingestellt wird.

Vorteilhafterweise ist die Leuchte als Stehleuchte ausgebildet, wobei die Lichtaufnahmeelemente in der Leuchtensäule der erfindungsgemäßen Leuchte angeordnet sind. Eine bestmögliche Erfassung des Umgebungslichts ist inbesondere mit neuen gleichmäßig entlang des Umfangs der Leuchtensäule angeordneten Lichtaufnahmeelementen möglich.

Die Lichtaufnahmeelemente können jeweils durch Lichtleiterfasern gebildet sein, die lediglich das jeweils einfallende Umgebungslicht detektieren und an einen zentralen, gemeinsamen lichtempfindlichen Lichtsensor weiterleiten, der das somit erfaßte Umgebungslicht in ein Informationssignal für eine Steuereinheit umwandelt. Diese Steuereinheit regelt bzw. dimmt die Leuchte über ein gewöhnliches elektronisches Vorschaltgerät, wobei die Steuereinheit und das elektronische Vorschaltgerät in der Leuchte, im Falle einer Stehleuchte in der Leuchtensäule und/oder im Leuchtenkopf, angeordnet sein können.

Außerdem ist möglich, daß anstelle von Lichtleitfasern lichtsammelnde Kunststoffelemente verwendet werden, die derart ausgebildet bzw. angeordnet sind, daß sie einfallendes Umgebungslicht - wie zuvor beschrieben - an einen einzigen zentralen Lichtsensor weiterleiten. Hierfür sind insbesondere Profilstäbe geeignet, die aus lichtsammelnden Kunststoffen hergestellt sind, die unter dem Markennamen LISA® der Bayer AG allgemein bekannt sind.

Ebenso können die Lichtaufnahmeelemente lichtempfindliche Sensorelemente sein, wie z.B. Fotowiderstände, Fototransistoren oder Fotozellen, die abhängig von dem jeweils erfaßten Umgebungslicht ein sich entsprechend veränderndes elektrisches Signal an die Steuereinheit abgeben. Eine zusätzliche Logik, die in der oben beschriebenen Steuereinheit integriert sein kann, ermittelt den größten der von den einzelnen Lichtaufnahmeelementen gemessenen Sensorwerte, d.h. dasjenige Lichtaufnahmeelement, welches das Umgebungslicht mit der größten Helligkeit erfaßt hat, wobei die Steuereinheit die Leuchte ausschließlich abhängig von dem elektrischen Signal, das von diesem Lichtaufnahmeelement geliefert wird, dimmt. Die Sensorwerte der anderen Lichtaufnahmeelemente werden vernachlässigt. Diese Vorgehensweise ist möglich, da ein Fensterbereich stets durch einfallendes Außenlicht am hellsten beleuchtet ist, so daß mit diesem Verfahren gewährleistet wird, daß stets das von demjenigen Lichtaufnahmeelement gelieferte elektrische Signal ausgewertet wird, welches das durch ein Fenster einfallende Außenlicht erfaßt.

Die Erfindung wird nachfolgend anhand bevorzugter Ausführungsbeispiele unter Bezugnahme auf die Zeichnung näher beschrieben.
Fig. 1 zeigt eine schematische Darstellung einer erfindungsgemäßen Leuchte,
Fig. 2 zeigt eine schematische Darstellung der Anordnung der Lichtaufnahmeelemente und die Verarbeitung der von den Lichtaufnahmeelementen gelieferten Signale gemäß einem ersten Ausführungsbeispiel der vorliegenden Erfindung,
Fig. 3 zeigt eine Draufsicht auf die Anordnung von Lichtaufnahmeelementen gemäß einem zweiten Ausführungsbeispiel der vorliegenden Erfindung,
Fig. 4a zeigt eine vergrößerte Darstellung eines einzelnen Lichtaufnahmeelements des in Fig. 3 gezeigten Ausführungsbeispiels, und
Fig. 4b zeigt eine Variante des in Fig. 4a dargestellten Lichtaufnahmeelements.

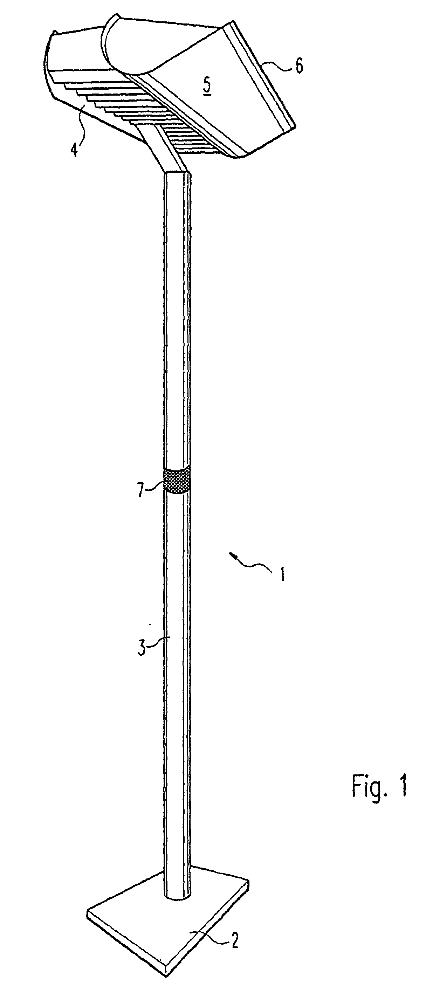

Fig. 1 zeigt schematisch die äußere Ausgestaltung einer erfindungsgemäßen Leuchte, wobei die Leuchte insbesondere als Stehleuchte ausgebildet ist. Es ist jedoch zu beachten, daß die vorliegende Erfindung nicht auf den Einsatz in Stehleuchten beschränkt ist, sondern im Prinzip auf alle Leuchten anwendbar ist, bei denen die eingangs beschriebenen Probleme auftreten können.

Die in Fig. 1 gezeigte Stehleuchte 1 besteht im wesentlichen aus einem Fußabschnitt 2, einer Leuchtensäule 3 und einem Leuchtenkopf 4. Im vorliegenden Fall ist die in Fig. 1 dargestellte Stehleuchte 1 als Deckenfluter ausgestaltet, so daß der Leuchtenkopf 4 eine zu der Decke hin gerichtete (und vorzugsweise schwenkbare) Halterung 5 aufweist, in dem ein beliebiges Beleuchtungsmittel angeordnet ist, welches künstliches Licht erzeugt. Dieses Beleuchtungsmittel kann demnach einen Leuchtstofflampe, eine Glühlampe, eine Hochdruck-Gasentladungslampe usw. sein.

In der Leuchtensäule 3 ist eine Halterung 7 für mehrere Lichtaufnahmeelemente oder Lichtsensoren eingebaut, die gleichmäßig entlang des Umfangs der Leuchtensäule 3 verteilt sind. Insbesondere sind die einzelnen Lichtaufnahmeelemente, die in der Halterung 7 angeordnet sind, derart ausgerichtet, daß sie im wesentlichen horizontal einfallendes Licht erfassen. Vorteilhafterweise befindet sich die Halterung 7 mit den (in Fig. 1 nicht gezeigten Lichtaufnahmeelementen) in der oberen Hälfte der Leuchtensäule 3.

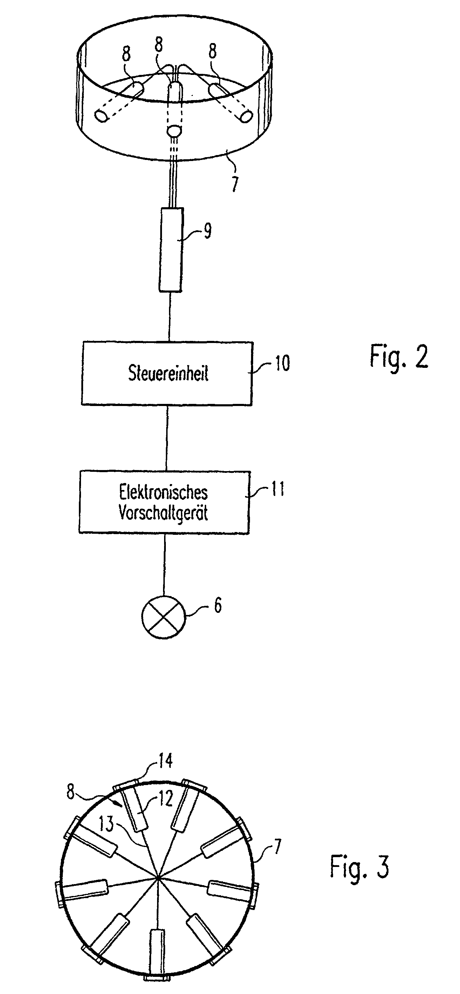

Fig. 2 zeigt eine vergrößerte Darstellung der in Fig. 1 dargestellten Halterung 7, wobei rein schematisch drei einzelne Lichtaufnahmeelemente 8 von der Halterung 7 gehalten werden. Wie bereits oben beschrieben worden ist, sind gemäß der vorliegenden Erfindung die einzelnen Lichtaufnahmeelemente gleichmäßig in Umfangsrichtung der Leuchte, d.h. bei dem in Fig. 1 und 2 gezeigten Ausführungsbeispiel gleichmäßig in Umfangsrichtung der Halterung 7, angeordnet. Der Klarheit halber wurde jedoch in Fig. 2 auf die Darstellung der weiteren, in Umfangsrichtung der Halterung 7 angeordneten Lichtaufnahmeelemente 8 verzichtet. Die Halterung 7 kann beliebig ausgestaltet sein. Bei dem in Fig. 2 gezeigten Ausführungsbeispiel ist die Halterung 7 lediglich als Halterungsring ausgestaltet, so daß die einzelnen Lichtaufnahmeelemente in entsprechend ausgebildete Öffnungen des Halterungsringes 7 eingesetzt und somit lediglich an ihrem äußeren Ende in dem Halterungsring 7 gehalten werden. Die Halterung 7 kann jedoch beispielsweise auch als ein gegossenes Kunststoffteil ausgestaltet sein, wobei die einzelnen Lichtaufnahmeelemente 8 in der Halterung 7 vollständig eingegossen sind. Aus der obigen Beschreibung zu der Halterung 7 geht hervor, daß der Ausgestaltung der Halterung 7 nahezu keine Grenzen gesetzt sind und die Halterung 7 lediglich derart ausgestaltet sein muß, daß die Halterung 7 die einzelnen Lichtaufnahmeelemente 8 fixieren kann. Vorteilhafterweise sollten die Lichtaufnahmeelemente 8 von der Halterung 7 so gehalten werden, daß sie im wesentlichen horizontal einfallendes Umgebungslicht erfassen können.

Bei dem in Fig. 2 gezeigten Ausführungsbeispiel sind die einzelnen Lichtaufnahmeelemente 8 lediglich als Lichtleiterfaser ausgestaltet, d.h. die Lichtaufnahmeelemente 8 erfassen das jeweils auf sie einfallende Umgebungslicht und leiten dieses im Prinzip unverändert auf einen zentralen, gemeinsamen lichtempfindlichen Lichtsensor 9 weiter. Dieser lichtempfindliche Lichtsensor 9 kann auf jede bekannte Art und Weise ausgestaltet und insbesondere durch einen Fotowiderstand, Fototransistor oder einer Fotozelle usw. realisiert sein. Der lichtempfindliche Lichtsensor 9 wandelt das ihm von den einzelnen als Lichtleiterfasern ausgestalteten Lichtaufnahmeelementen 8 zugeführte Umgebungslicht in ein entsprechendes elektrisches Istwertsignal um und gibt dieses an ein Steuergerät bzw. eine Steuereinheit 10 weiter. Die Steuereinheit 10 regelt bzw. dimmt nunmehr automatisch abhängig von dem Istwertsignal des zentralen lichtempfindlichen Lichtsensors 9 das Beleuchtungsmittel 6 der erfindungsgemäßen Leuchte. Zu diesem Zweck ist ein gewöhnliches elektronisches Vorschaltgerät 11 vorgesehen, welches die Helligkeit des Beleuchtungsmittels 6 abhängig von einem von der Steuereinheit 10 gelieferten Steuersignal einstellt. Insbesondere kann die Dimmung bekannterweise dadurch erfolgen, daß das elektronische Vorschaltgerät 11 die Frequenz und/oder das Tastverhältnis der dem Beleuchtungsmittel 6 zugeordneten elektrischen Spannung variiert.

Hinsichtlich der in Fig. 2 gezeigten Anordnung ist zu bemerken, daß neben den von der Halterung 7 gehaltenen Lichtaufnahmeelementen 8 auch der zentrale lichtempfindliche Lichtsensor 9, die Steuereinheit 10 sowie das elektronische Vorschaltgerät 11 in der in Fig. 1 gezeigten Leuchte 1, insbesondere in der Leuchtensäule 3 und/oder im Leuchtenkopf 4, untergebracht sein können.

Fig. 3 zeigt eine Draufsicht auf die in Fig. 1 gezeigte Halterung 7 mit mehreren gleichmäßig in Umfangsrichtung der Halterung 7 angeordneten Lichtaufnahmeelementen zur Erfassung des Umgebungslichts. Insbesondere werden bei dem in Fig. 3 gezeigten Ausführungsbeispiel neun Lichtaufnahmeelemente von der Halterung 7 gehalten, wobei die einzelnen Lichtaufnahmeelemente 8 derart angeordnet sind, daß sie im wesentlichen horizontal ausgerichtet sind. Wie bereits anhand Fig. 1 erläutert wurde, sind die Lichtaufnahmeelemente 8 wiederum in wesentlichen durch Lichtleiterfasern 13 gebildet, die lediglich das von ihnen detektierte Umgebungslicht an den in Fig. 2 gezeigten zentralen lichtempfindlichen Lichtsensor 9 weiterleiten. Zudem umfassen die in Fig. 3 gezeigten Lichtaufnahmeelemente 8 eine Abschirmhülse 12, die aus einem lichtundurchlässigen (beispielsweise schwarzen) Material gefertigt ist. Diese Abschirmhülse 12 weist an ihrem äußeren Ende eine flanschartige Verbreiterung 14 auf, mit deren Hilfe die Abschirmhülse 12 mit der darin befindlichen Lichtleiterfaser 13 in der Halterung 7 fixiert ist.

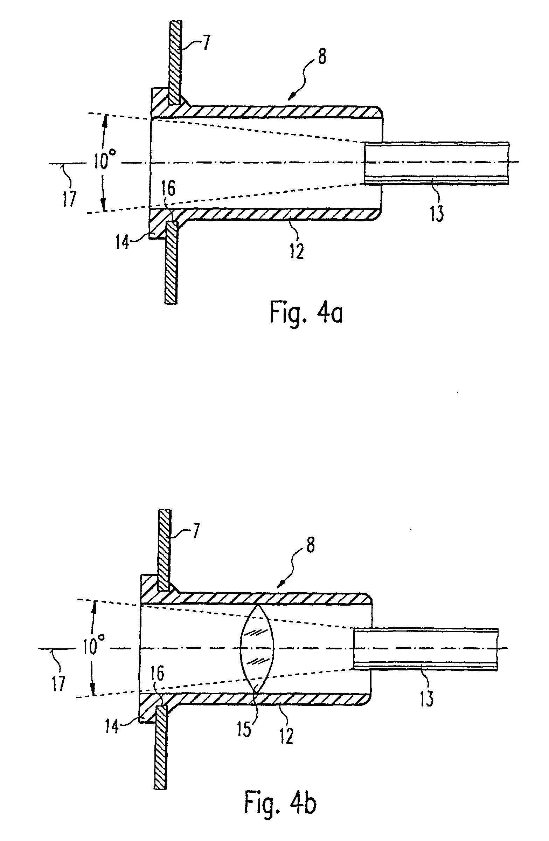

Dies soll nachfolgend näher unter Bezugnahme auf Fig. 4a erläutert werden.

Wie in Fig. 4a gezeigt ist, ist die Lichtleiterfaser 13 in die Abschirmhülse 12 eingesetzt und darin gehalten. Das äußere Ende der Abschirmhülse 12 besitzt die bereits zuvor erläuterte flanschartige Verbreitung 14, die eine in Umfangsrichtung der Abschirmhülse 12 verlaufende Ausnehmung oder Nut 16 aufweist, in welche die Seitenwand der Halterung 7 hineinragt, so daß die Abschirmhülse 12 mit der darin befindlichen Lichtleiterfaser 13 fest in der in Fig. 4a gezeigten Stellung von der Halterung 7 gehalten wird. Die Abschirmhülse 12 kann in die in Fig. 4a gezeigte Stellung gebracht werden, indem die Abschirmhülse 12 in Fig. 4a von links nach rechts durch die entsprechende Ausnehmung der Halterung 7 gedrückt wird, so daß die Seitenwand der Halterung 7 schließlich in die Ausnehmung bzw. Nut 16 der Abschirmhülse 12 einrastet.

Die Abschirmhülse 12 dient als optisches Abschirmelement und sorgt dafür, daß von der Lichtleiterfaser 13 lediglich dasjenige Umgebungslicht erfaßt wird, welches in einem Bereich von ± 5° zur horizontalen Ebene 17 einfällt. Durch diese Begrenzung des von der Lichtleiterfaser 13 erfaßten Umgebungslichts können Einflüsse von Kunstlicht anderer Kunstlichtquellen in dem von der Leuchte beleuchteten Raum vermindert und im Idealfall ausgeschlossen werden. Selbstverständlich ist der von der Lichtleiterfaser 13 gemäß Fig. 4a erfaßte Einfallswinkelbereich nicht auf die in Fig. 4a dargestellten 10° beschränkt, sondern kann auch auf einen anderen, insbesondere kleineren Wert eingestellt werden, wobei jedoch stets darauf zu achten ist, daß der Einfluß anderer Kunstlichtquellen durch die Abschirmhülse ausreichend gemindert wird.

Fig. 4b zeigt eine Variante der in Fig. 4a dargestellten Ausgestaltung des Lichtaufnahmeelements 8, wobei zusätzlich zu der Abschirmhülse 12 eine optische Linsenanordnung 15 vor der Lichtleiterfaser 13 angeordnet ist, die ebenfalls zur scharfen Begrenzung des von der Lichtleiterfaser 13 überwachten Sichtfeldes dient. Im Prinzip kann eine derartige optische Linsenanordnung 15 auch unabhängig von der lichtundurchlässigen Abschirmhülse 12 zur Begrenzung des von der Lichtleiterfaser 13 erfaßten Sichtfeldes eingesetzt werden.

Bei den in Fig. 2 bis 4 dargestellten Ausführungsbeispielen sind die einzelnen, von der Halterung 7 gehaltenen Lichtaufnahmeelemente jeweils durch Lichtleiterfasern gebildet, die jeweils das einfallende Umgebungslicht an einen zentralen lichtempfindlichen Lichtsensor 9 weiterleiten. Statt dessen können jedoch die Lichtaufnahmeelemente 8 ihrerseits durch lichtempfindliche Sensoren gebildet sein, d.h. die einzelnen Lichtaufnahmeelemente 8 können ihrerseits abhängig von dem jeweils erfaßten Umgebungslicht der Steuereinheit 10 ein elektrisches Istwertsignal zuführen, wobei die Steuereinheit 10 abhängig von den ihr zugeführten elektrischen Istwertsignalen über das elektronische Vorschaltgerät 11 schließlich die Leuchte dimmt bzw. regelt. Die lichtempfindlichen Lichtaufnahmeelemente 8 können - wie auch der in Fig. 2 gezeigte zentrale lichtempfindliche Lichtsensor 9 - durch jedes beliebige lichtempfindliche Sensorelement, wie z.B. durch einen Fotowiderstand, Fototransistor oder eine Fotozelle, gebildet sein. Werden die einzelnen von der Halterung 7 gehaltenen Lichtaufnahmeelemente 8 als lichtempfindliche Lichtsensoren ausgebildet, kann selbstverständlich der in Fig. 2 dargestellte zentrale lichtempfindliche Sensor 9 entfallen. Vorteilhafterweise ist bei dieser Ausgestaltung jedoch dann eine Logik vorzusehen, die für die Ansteuerung des in Fig. 2 gezeigten elektronischen Vorschaltgerätes 11 lediglich das Istwertsignal desjenigen Lichtaufnahmeelements 8 auswählt, welches die größte Umgebungslichthelligkeit erfaßt. Vorteilhafterweise wird ausschließlich dieses ausgewählte Istwertsignal für die Dimmung der Leuchte verwendet, während die Sensorwerte bzw. Istwertsignale der andere Lichtaufnahmeelemente 8 bei der Dimmung bzw. Regelung der Leuchte vernachlässigt werden. Diese Vorgehensweise ist möglich, da in der Regel ein Fensterbereich des von der Leuchte zu beleuchtenden Raumes stets am hellsten (durch das einfallende Außenlicht) beleuchtet ist, so daß bei Auswahl des die größte Umgebungslichthelligkeit erfassenden Lichtaufnahmeelements 8 durch die zuvor erwähnte Logik gewährleistet ist, daß für die Dimmung der Leuchte stets das Istwertsignal desjenigen lichtempfindlichen Sensors 8 verwendet wird, der am nächsten zu einem Fensterbereich hin gerichtet ist. Somit ist auch bei diesem Ausführungsbeispiel eine bestmögliche Berücksichtigung des Außenlichts bei der automatischen Dimmung der erfindungsgemäßen Leuchte gewährleistet. Die zuvor beschriebene Logik zur Auswahl desjenigen lichtempfindlichen Sensors 8, der die größte Umgebungslichthelligkeit erfaßt, kann als separate Einheit zusätzlich zu der in Fig. 2 gezeigten Steuereinheit 10 vorgesehen oder aber insbesondere in der Steuereinheit 10 integriert sein.

## Patentansprüche

1. Leuchte (1),
mit Beleuchtungsmitteln (6) zur Abgabe eines künstlichen Lichts bestimmter Helligkeit,
mit Lichterfassungsmitteln (8) zur Erfassung von Umgebungslicht der Leuchte (1), und
mit Steuermitteln (10,11) zur automatischen Dimmung der Beleuchtungsmittel (6) abhängig von dem von den Lichterfassungsmitteln (8) erfaßten Umgebungslicht,
**dadurch gekennzeichnet,**
**daß** die Lichterfassungsmittel mehrere gleichmäßig in Umfangsrichtung der Leuchte (1) verteilte Lichtaufnahmeelemente (8) umfassen, die jeweils derart ausgestaltet sind, daß sie vorwiegend horizontal einfallendes Umgebungslicht erfassen.

2. Leuchte nach Anspruch 1,
**dadurch gekennzeichnet,**
**daß** die Leuchte (1) eine Stehleuchte ist, wobei die Beleuchtungsmittel (6) in einem Leuchtenkopf (4) angeordnet sind, der von einer Leuchtensäule (3) getragen wird, und
**daß** die Lichterfassungsmittel (8) in der Leuchtensäule (3) angeordnet sind.

3. Leuchte nach Anspruch 2,
**dadurch gekennzeichnet,**
**daß** die Lichterfassungsmittel (8) in der oberen Hälfte der Leuchtensäule (3) angeordnet sind.

4. Leuchte nach Anspruch 2 oder 3,
**dadurch gekennzeichnet,**
**daß** die einzelnen Lichtaufnahmeelemente (8) der Lichterfassungsmittel von einer in die Leuchtensäule (3) integrierten Halterung (7) gehalten werden, so daß die einzelnen Lichtaufnahmeelemente (8) gleichmäßig entlang des Umfanges der Leuchtensäule (3) und im wesentlichen in einer horizontalen Ebene (17) angeordnet sind.

5. Leuchte nach einem der Ansprüche 2 bis 4,
**dadurch gekennzeichnet,**
**daß** die Lichterfassungsmittel neun Lichtaufnahmeelemente (8) umfassen.

6. Leuchte nach einem der vorherigen Ansprüche,
**dadurch gekennzeichnet,**
**daß** die Lichtaufnahmeelemente (8) jeweils derart ausgestaltet sind, daß sie Umgebungslicht erfassen, welches innerhalb eines Einfallswinkelbereichs von ± 5° bezüglich der horizontalen Ebene (17) einfällt.

7. Leuchte nach Anspruch 6,
**dadurch gekennzeichnet,**
**daß** die Lichtaufnahmeelemente (8) jeweils mit Einfallswinkelbegrenzungsmitteln (12,15) versehen sind, die das von dem jeweiligen Lichtaufnahmeelement (8) überwachte Sichtfeld auf den Einfallswinkelbereich von ±5° bezüglich der horizontalen Ebene (17) begrenzen.

8. Leuchte nach Anspruch 7,
**dadurch gekennzeichnet,**
**daß** die Einfallswinkelbegrenzungsmittel jedes Lichtaufnahmeelements (8) ein lichtundurchlässiges Abschirmelement (12) umfassen.

9. Leuchte nach Anspruch 8,
**dadurch gekennzeichnet,**
**daß** das lichtundurchlässige Abschirmelement (12) hülsenförmig eine das Umgebungslicht detektierende Oberfläche des jeweiligen Lichtaufnahmelements (8) umgibt.

10. Leuchte nach einem der Ansprüche 7 bis 9,
**dadurch gekennzeichnet,**
**daß** die Einfallswinkelbegrenzungsmittel eine optische Linsenanordnung (15) zur Begrenzung des von dem jeweiligen Lichtaufnahmeelement (8) überwachten Sichtfeldes umfassen.

11. Leuchte nach einem der vorhergehenden Ansprüche,
**dadurch gekennzeichnet,**
**daß** die Lichtaufnahmeelemente (8) jeweils durch Lichtleiterfasern (13) gebildet sind, die mit einem gemeinsamen lichtempfindlichen Lichtsensor (9) verbunden sind, der abhängig von dem von den Lichtleiterfasern (13) erfaßten Umgebungslicht ein Umgebungslicht-lstwertsignal für die Steuermittel (10,11) erzeugt,
wobei die Steuermittel (10,11) derart ausgestaltet sind, daß sie die Beleuchtungsmittel (6) abhängig von dem Umgebungslicht-Istwertsignal des gemeinsamen lichtempfindlichen Lichtsensors (9) dimmen.

12. Leuchte nach einem der Ansprüche 1 bis 10,
**dadurch gekennzeichnet,**
**daß** die Lichtaufnahmeelemente (8) jeweils in Form von lichtsammelnden Kunststoffelementen ausgebildet sind, die mit einem gemeinsamen lichtempfindlichen Lichtsensor (9) verbunden sind, der abhängig von dem von den lichtsammeInden Kunststoffelementen erfaßten Umgebungslicht ein Umgebungslicht-Istwertsignal für die Steuermittel (10,11) erzeugt,
wobei die Steuermittel (10,11) derart ausgestaltet sind, daß sie die Beleuchtungsmittel (6) abhängig von dem Umgebungslicht-Istwertsignal des gemeinsamen lichtempfindlichen Lichtsensors (9) dimmen.

13. Leuchte nach Anspruch 12,
**dadurch gekennzeichnet,**
**daß** jedes lichtsammelnde Kunststoffelement durch einen Profilstab aus einem lichtsammelnden Kunststoff gebildet ist.

14. Leuchte nach einem der Ansprüche 1 bis 10,
**dadurch gekennzeichnet,**
**daß** die Lichtaufnahmeelemente (8) lichtempfindliche Sensorelemente sind und jeweils abhängig von dem erfaßten Umgebungslicht ein Umgebungslicht-Istwertsignal an die Steuermittel (10,11) abgeben, und
**daß** die Steuermittel (10,11) derart ausgestaltet sind, daß sie die Beleuchtungsmittel (6) abhängig von demjenigen Umgebungslicht-Istwertsignal dimmen, welches die größte Umgebungslichthelligkeit anzeigt.

15. Leuchte nach einem der vorhergehenden Ansprüche,
**dadurch gekennzeichnet,**
**daß** die Steuermittel (10,11) eine Steuereinheit (10) zur Auswertung des von den Lichtaufnahmeelementen (8) erfaßten Umgebungslichts und ein von der Steuereinheit (10) angesteuertes elektronisches Vorschaltgerät (11) zum Dimmen der Beleuchtungsmittel (6) umfassen.

## Claims

1. Lamp (1),
having illumination means (6) for emitting an artificial light of certain brightness,
having light detection means (8) for detecting light of the surroundings of the lamp (1), and
having control means (10, 11) for automatic dimming of the illumination means (6) in dependence upon the light of the surroundings detected by the light detection means (8),
**characterized in that**,
the light detection means include a plurality of light receptor elements (8) uniformly distributed in the peripheral direction of the lamp (1), which light receptor elements are each so configured that they primarily capture horizontally incident light of the surroundings.

2. Lamp according to claim 1,
**characterized in that**,
the lamp (1) is a standard lamp, the illumination means (6) being arranged in a lamp head (4) which is carried by a lamp standard (3), and
**in that** the light detection means (8) are arranged in the lamp standard (3).

3. Lamp according to claim 2,
**characterized in that**,
the light detection means (8) are arranged in the upper half of the lamp standard (3).

4. Lamp according to claim 2 or 3,
**characterized in that**,
the individual light receptor elements (8) of the light detection means are held by a holder (7) integrated in the lamp standard (3), so that the individual light receptor elements are arranged uniformly along the periphery of the lamp standard (3) and substantially in a horizontal plane (17).

5. Lamp according to any of claims 2 to 4,
**characterized in that**,
the light detection means include nine light receptor elements (8).

6. Lamp according to any preceding claim,
**characterized in that**,
the light receptor elements (8) are each so configured that they capture light of the surroundings which is incident within an incident angle range of ± 5° with reference to the horizontal plane (17).

7. Lamp according to claim 6,
**characterized in that**,
the light receptor elements (8) are each provided with incident angle restriction means (12, 15) which restrict the field of view monitored by the light receptor element (8) concerned to the incident angle range of ± 5° with reference to the horizontal plane (17).

8. Lamp according to claim 7,
**characterized in that**,
the incident angle restriction means of each light receptor element (8) include a screening element (12) opaque to light.

9. Lamp according to claim 8,
**characterized in that**,
the light-opaque screening element (12) surrounds in the manner of a sleeve a surface of the light receptor element (8) concerned which detects the light of the surroundings.

10. Lamp according to any of the claims 7 to 9,
**characterized in that**,
the incident angle restriction means include an optical lens arrangement (15) for restricting the field of view monitored by the light receptor element (8) concerned.

11. Lamp according to any preceding claim,
**characterized in that**,
the light receptor elements (8) are each formed by means of light conducting fibres (13) which are connected with a common light-sensitive light sensor (9) which, in dependence upon the light of the surroundings captured by the optical fibres (13), generates a surroundings light actual-value signal for the control means (10, 11), the control means (10, 11) being so configured that they dim the illumination means (6) in dependence upon the surroundings light actual-value signal of the common light-sensitive light sensor (9).

12. Lamp according to any of claims 1 to 10,
**characterized in that**,
the light receptor elements (8) are constituted each in the form of light-collecting plastics elements which are connected with a common light-sensitive light sensor (9) which, in dependence upon the light of the surroundings captured by the light-collecting plastics elements, generates a surroundings light actual-value signal for the control means (10, 11), the control means (10, 11) being so constituted that they. dim the illumination means (6) in dependence upon the surroundings light actual-value signal of the common light-sensitive light sensor (9).

13. Lamp according to claim 12,
**characterized in that**,
each light-collecting plastics element is formed by means of a profiled rod of a light-collecting plastics.

14. Lamp according to any of claims 1 to 10,
**characterized in that**,
the light receptor elements (8) are light-sensitive sensor elements and each issues, in dependence upon the captured light of the surroundings, a surroundings light actual-value signal to the control means (10, 11) and
**in that** the control means (10, 11) are so configured that they dim the illumination means (6) in dependence upon that surroundings light actual-value signal which indicates the greatest surroundings light brightness.

15. Lamp according to any preceding claim,
**characterized in that**,
the control means (10, 11) include a control unit (10) for evaluation of the light of the surroundings captured by the light receptor elements (8) and an electronic ballast (11), controlled by the control unit (10), for dimming the illumination means (6).

## Revendications

1. Luminaire (1),
avec des moyens d'éclairage (6) pour la fourniture d'une lumière artificielle de luminosité définie,
avec des moyens de détection de lumière (8) pour détecter la lumière ambiante du luminaire (1), et
avec des moyens de commande (10, 11) pour la variation de lumière automatique des moyens d'éclairage (6) en fonction de la lumière ambiante détectée par les moyens de détection de lumière (8),
**caractérisé**
**en ce que** les moyens de détection de lumière comprennent plusieurs éléments de réception de lumière (8), répartis uniformément dans le sens périphérique du luminaire (1), qui sont conçus chacun de façon qu'ils détectent principalement la lumière ambiante arrivant horizontalement.

2. Luminaire selon la revendication 1,
**caractérisé**
**en ce que** le luminaire (1) est un lampadaire, les moyens d'éclairage (6) étant disposés dans une tête de luminaire (4) qui est portée par une colonne de luminaire (3), et
**en ce que** les moyens de détection de lumière (8) sont disposés dans la colonne de luminaire (3).

3. Luminaire selon la revendication 2,
**caractérisé**
**en ce que** les moyens de détection de lumière (8) sont disposés dans la moitié supérieure de la colonne de luminaire (3).

4. Luminaire selon la revendication 2 ou 3,
**caractérisé**
**en ce que** les différents éléments de réception de lumière (8) des moyens de détection de lumière sont maintenus par une fixation (7) intégrée dans la colonne de luminaire (3), de sorte que les différents éléments de réception de lumière (8) sont disposés uniformément le long de la périphérie de la colonne de luminaire (3) et essentiellement dans un plan (17) horizontal.

5. Luminaire selon l'une quelconque des revendications 2 à 4,
**caractérisé**
**en ce que** les moyens de détection de lumière comprennent neuf éléments de réception de lumière (8).

6. Luminaire selon l'une quelconque des revendications précédentes,
**caractérisé**
**en ce que** les éléments de réception de lumière (8) sont conçus chacun de telle sorte qu'ils détectent de la lumière ambiante qui rentre à l'intérieur d'une plage d'angle d'incidence de ± 5° par rapport au plan horizontal (17).

7. Luminaire selon la revendication 6,
**caractérisé**
**en ce que** les éléments de réception de lumière (8) sont pourvus chacun de moyens de limitation d'angle d'incidence (12, 15), qui délimitent le champ de vision contrôlé par l'élément de réception de lumière respectif (8) à la plage d'angle d'incidence de ± 5° par rapport au plan horizontal (17).

8. Luminaire selon la revendication7,
**caractérisé**
**en ce que** les moyens de limitation d'angle d'incidence de chaque élément de réception de lumière (8) comprennent un élément d'écran (12) imperméable à la lumière.

9. Luminaire selon la revendication 8,
**caractérisé**
**en ce que** l'élément d'écran (12) imperméable à la lumière entoure à la façon d'une douille une surface détectant la lumière ambiante de l'élément de réception de lumière respectif (8).

10. Luminaire selon l'une quelconque des revendications 7 à 9,
**caractérisé**
**en ce que** les moyens de limitation d'angle d'incidence comprennent un dispositif optique à lentilles (15) pour la limitation du champ de vision contrôlé par l'élément de réception de lumière respectif (8).

11. Luminaire selon l'une quelconque des revendications précédentes,
**caractérisé**
**en ce que** les éléments de réception de lumière (8) sont formés chacun par des fibres optiques (13), qui sont reliées à un capteur de lumière (9) sensible à la lumière et commun, qui génère un signal de valeur réelle de lumière ambiante pour les moyens de commande (10, 11) en fonction de la lumière ambiante détectée par les fibres optiques (13),
les moyens de commande (10, 11) étant conçus de telle façon qu'ils font varier la lumière des moyens d'éclairage (6) en fonction du signal de valeur réelle de lumière ambiante du capteur de lumière (9) commun et sensible à la lumière.

12. Luminaire selon l'une quelconque des revendications 1 à 10,
**caractérisé**
**en ce que** les éléments de réception de lumière (8) sont conçus respectivement sous la forme d'éléments plastique collecteurs de lumière, qui sont reliés à un détecteur de lumière (9) commun et sensible à la lumière, qui génère un signal de valeur réelle de lumière ambiante pour les moyens de commande (10, 11) en fonction de la lumière ambiante détectée par les éléments plastique collecteurs de lumière, les moyens de commande (10, 11) étant conçus de telle façon qu'ils font varier la lumière des moyens d'éclairage (6) en fonction du signal de valeur réelle de lumière ambiante du détecteur de lumière (9) commun et sensible à la lumière.

13. Luminaire selon la revendication 12,
**caractérisé**
**en ce que** chaque élément plastique collecteur de lumière est formé par une barre profilée à base d'un plastique collecteur de lumière.

14. Luminaire selon l'une quelconque des revendications 1 à 10,
**caractérisé**
**en ce que** les éléments de réception de lumière (8) sont des éléments détecteurs sensibles à la lumière et envoient chacun un signal de valeur réelle de lumière ambiante aux moyens de commande (10, 11) en fonction de la lumière ambiante détectée, et en ce que les moyens de commande (10, 11) sont conçus de façon qu'ils font varier la lumière des moyens d'éclairage (6) en fonction du signal de valeur réelle de lumière ambiante, qui affiche la luminosité de lumière ambiante maximale.

15. Luminaire selon l'une quelconque des revendications précédentes,
**caractérisé**
**en ce que** les moyens de commande (10, 11) comprennent une unité de commande (10) pour l'analyse de la lumière ambiante détectée par les éléments de réception de lumière (8) et un ballast (11) électronique amorcé par l'unité de commande (10) pour faire varier la lumière des moyens d'éclairage (6).
